## Europäisches Patentamt

## European Patent Office

## Office européen des brevets

(11) Veröffentlichungsnummer: **0 463 442 B1**

(12) **EUROPÄISCHE PATENTSCHRIFT**

(45) Veröffentlichungstag der Patentschrift: **14.12.94**

(21) Anmeldenummer: **91109433.2**

(22) Anmeldetag: **08.06.91**

(51) Int. Cl.⁵: **C23G 3/00**, C22B 1/00, B03C 1/28

(54) Verfahren und Vorrichtung zur Aufbereitung von Rückständen aus der spanabhebenden Bearbeitung ferromagnetischer Werkstoffe.

(30) Priorität: **26.06.90 DE 4020229**

(43) Veröffentlichungstag der Anmeldung:
**02.01.92 Patentblatt 92/01**

(45) Bekanntmachung des Hinweises auf die Patenterteilung:
**14.12.94 Patentblatt 94/50**

(84) Benannte Vertragsstaaten:
**AT BE CH DE DK ES FR GB GR IT LI LU NL SE**

(56) Entgegenhaltungen:
EP-A- 0 116 468      WO-A-79/00244
BE-A- 888 718        FR-A- 2 209 859
FR-A- 2 286 676      GB-A- 2 219 526

(73) Patentinhaber: **FILTERWERK MANN & HUMMEL GMBH**
**Postfach 4 09**
**D-71631 Ludwigsburg (DE)**

(72) Erfinder: **Heck, Alfred**
**Zur Nohn 42**
**B-4701 Eupen (BE)**

(74) Vertreter: **Voth, Gerhard, Dipl.-Ing.**
**FILTERWERK MANN + HUMMEL GMBH**
**Postfach 4 09**
**D-71631 Ludwigsburg (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

**Beschreibung**

Die Erfindung betrifft ein Verfahren zur Aufbereitung von Rückständen aus der spanabhebenden Bearbeitung ferromagnetischer Werkstoffe, sowie eine Vorrichtung zur Durchführung dieses Verfahrens, gemäß den Ansprüchen 1 und 7.

Aus der DE-OS 37 39 496 ist eine Bandfiltereinrichtung bekannt, mit welcher verunreinigte Flüssigkeit, insbesondere Bearbeitungsflüssigkeit, welche bei der spanabhebenden Bearbeitung von Metallen verwendet wird, gereinigt werden kann. Eine solche Bandfiltereinrichtung ist mit einer Schmutzkammer versehen, welcher die Flüssigkeit zugeführt wird. Unterhalb dieser Schmutzkammer ist ein Filterboden angeordnet, auf dem sich ein Filtervlies befindet. Das Filtervlies wird schrittweise in Abhängigkeit von der abgelagerten Menge an Rückstanden automatisch fortbewegt. Die Rückstände werden mit dem Filtervlies aus der Einrichtung ausgetragen und gelangen in einen Auffangbehälter. Diese Rückstände enthalten neben einem großen Teil Metallspäne bzw. Metallstaub auch Schleifmittelrückstände, beispielsweise Korundmaterial. Außerdem sind diese Rückstände noch stark mit Öl bzw. mit Emulsion behaftet.

Eine Entsorgung dieser Mischung ist ohne eine weitere Aufbereitung nur durch zugelassene Entsorgungsunternehmen und nur auf Sonderdeponien möglich. Es wurde zwar schon versucht, diese Mischung einer Verbrennungsanlage zuzuführen. Aufgrund der Bestandteilen an Metallen sowie Korund stellt dies jedoch eine unwirtschaftliche und aufwendige Lösung dar. Ein Einschmelzen der Metalle in einem Schmelzofen ist wegen des hohen Fremdstoffanteils ebenfalls unzweckmäßig.

Aus der DE-OS 37 25 528 ist eine Vorrichtung zum Pressen bzw. Entwässern von Suspensionen, Schlämmen oder dergleichen bekannt. Es hat sich jedoch gezeigt, daß auch selbst unter hohen Drücken eine Entfernung des an den Rückständen anhaftenden Öls nicht möglich ist.

Weiterhin ist aus der BE-A-888 718 eine Vorrichtung zum Trennen von magnetischen und nichtmagnetischen Metalloxiden bekannt. Über einen geeigneten elektrisch oder pneumatisch angetriebenen magnetischen Trommel wird das Metalloxid aufgetragen. Während sich von der Trommel die nichtmagnetischen Metalloxidteile aufgrund der Schwerkraft lösen werden die magnetischen Metallteile über eine Trenneinrichtung von der Trommel abgelöst und gelangen in eine Behälter.

Ein Nachteil dieser Einrichtung ist darin zu sehen, daß eine Aufbereitung der Metalloxide welche ein Recyceln möglich machen, nicht vorgesehen ist. Die Metalloxide sind deshalb auch nach dem Trennen mit Verunreinigungen versehen und damit für Recyclingprozesse nicht brauchbar.

Der Erfindung liegt deshalb die Aufgabe zugrunde, ein Verfahren und eine Vorrichtung zu schaffen, mit welcher eine Aufbereitung, Trennung und damit ein Recyling der anfallenden Rückstände möglich ist. Diese Aufgabe wird verfahrensgemäß durch Anspruch 1 gelöst. Eine Vorrichtung zur Durchführung des Verfahrens zur Lösung der Aufgabe ist in Anspruch 7 beschrieben.

Wesentlicher Vorteil des dargestellten Verfahrens ist die Ablösung des an den Metall- oder Schleifmittelpartikeln anhaftenden Öls bzw. der Emulsion. Dadurch, daß die Rückstände in einer Waschlösung bewegt werden und durch das Zusammenwirken von öllöslichen Substanzen und einer kontinuierlichen Bewegung des Behälterinhalts wird ein solches Ablösen erreicht.

Da die Schleifrückstände im wesentlichen aus der Bearbeitung von Stahl bzw. Stahlgußteilen wie z. B. Kurbelwellen, Nockenwellen, Zylinderköpfen bzw. Zylinderbuchsen entstehen, läßt sich eine Trennung dieser metallischen Schleifrückstände von den weiteren in fester Form vorliegenden Rückständen durch eine magnetische Abscheidung bewerkstelligen.

Nachdem das an den Partikeln anhaftende Öl gelöst ist, wird in vorteilhafter Weise durch ein magnetisches Feld, welches an der Behälterwand erzeugt wird, eine Anlagerung der ferromagnetischen Anteile an der Behälterwand bewirkt. Damit kann die Waschlösung mit den nunmehr darin noch enthaltenen weiteren Bestandteilen, wie beispielsweise Korund, über eine Filtereinrichtung umgewälzt werden um diese Bestandteile aus der Waschlösung herauszufiltern.

In einer zweiten Filtrierphase werden die ferromagnetischen Bestandteile durch Abschalten des magnetischen Feldes wiederum mit der Waschlösung vermischt und einer zweiten Filtereinrichtung zur Aufnahme dieser Bestandteile zugeführt. Nachdem die Waschlösung restlos von Partikeln befreit ist, wird diese einem Waschwasseraufbereitungsbehälter zugeführt. Der Trennbehälter wird wieder mit aufbereiteter Waschlösung gefüllt und ein erneutes Einfüllen von Rückständen in die Waschlösung, d.h. in den Trennbehälter kann erfolgen.

In einer vorteilhaften Ausgestaltung der Erfindung kann zusätzlich zu der Rührbewegung in dem Behälter ein Umwälzen der Waschlösung und der darin enthaltenen Bestandteile erfolgen. Durch dieses Umwälzen wird sichergestellt, daß ein Absetzen der festen Bestandteile in dem Behälter vermieden wird.

Die Waschlösung wird sich im Laufe der Zeit mit Öl anreichern und kann nach einer bestimmten Zeit ausgetauscht werden. Es ist jedoch auch möglich und gemäß einer Ausgestaltung der Erfindung vorgesehen, diese Lösung einem Behälter zuzuführen, in welchem ein Abscheiden des in der Waschlösung enthaltenen Öls erfolgt.

Die Filtereinrichtungen können gemäß einer Weiterbildung der Erfindung mit Trocknungseinrichtungen versehen sein. Diese Trocknungseinrichungen sind beispielsweise Druckluft-Trockner, die eine Entfeuchtung des Filtrats vornehmen unter dem Begriff Druckluft-Schlammaufbereitungsfilter bekannt geworden sind. Nach dem Trocknen und Austragen des Filtrats aus dem Druckluft-Schlammaufbereitungsfilter kann eine Rückspülung des Filters mit der Waschlösung erfolgen.

Eine weitere vorteilhafte Ausgestaltung des Verfahrens hat zum Ziel, durch in dem Trennbehälter entsprechend angeordnete Abweisbleche

a) die mit Schmutz beladene Waschflüssigkeit von dem magnetischen Feld abzuleiten, damit nur die vorbeiströmenden, ferromagnetischen Bestandteile von den Magneten angezogen werden,
b) eine Aufwirbelung der ferromagnetischen Bestandteile, welche durch das magnetische Feld sich an der Behälterwand angelagert haben zu vermeiden,
c) einen frühzeitigen Verschleiß der Behälterinnenwand zu verhindern.

Die Vorrichtung, wie sie in dem nebengeordneten Hauptanspruch beschrieben ist, ist mit einem Trennbehälter ausgestattet, der sowohl eine gute Verwirbelung und damit eine gute Loslösung des an den festen Partikeln anhaftenden Öls gewährleistet, als auch Zonen aufweist, die keine oder nur geringe Strömungen der Flüssigkeit zulassen und in denen ein magnetisches Feld einwirkt.

Die gesamte Vorrichtung benötigt zum Umwälzen der Waschlösung, zum Ausfiltrieren der ferromagnetischen Bestandteile und zum Ausfiltrieren der restlichen Bestandteile, gemäß einer Ausgestaltung der Erfindung nur eine einzige Umwälzpumpe. Die verschiedenen Leitungszweige, die zu dem Behälter sowie zu den Filtereinrichtungen führen, werden über Ventile, beispielsweise fernsteuerbare Magnetventile, geschaltet. Hierzu ist eine Steuereinrichtung erforderlich, die beispielsweise eine Zeitsteuerung beinhaltet, so daß nach einem bestimmten Zeitschema das Umwälzen der Waschflüssigkeit, das Ausfiltrieren der einzelnen Bestandteile, das Trocknen, das Zudosieren sowie das Rückspülen der Filter erfolgt. Der Trennbehälter ist in einfacher Weise ein zylindrischer Hohlkörper, der an seinem unteren Ende mit einem trichterförmigen Auslauf versehen ist. An der Außenwand des zylindirschen Hohlkörpers sind Permanentmagnete oder Elektromagnete angeordnet, mit denen innerhalb des Trennbehälters ein magnetisches Feld erzeugt werden kann. Die Elektromagnete werden direkt über die Steuereinrichtung zu- bzw. abgeschaltet, während Permanentmagnete ebenfalls über die Steuereinrichtung dadurch wirksam gemacht werden, daß sie eine Bewegung zu der Behälterwand bzw. von der Behälterwand weg, z.B. mittels eines Stellantriebs ausführen. Die Magnete sind in vorteilhafter Ausgestaltung feinpolig oder grobpolig, sodaß je nach Gestaltung der Behälterwand eine angepaßte Anlagerung der ferromagnetischen Partikel an der Behälterinnnenwand erzeugt wird.

Anstelle eines zylindrischen Trennbehälters kann auch in einer alternativen Ausgestaltung ein Behälter aus mehreren ebenen Flächen gebildet werden.

Als Waschlösung eignet sich beispielsweise eine tensidhaltige Lösung, welche ein Emulgieren des Öls in Wasser bewirkt.

Eine Waschlösung, die zur Anwendung für das Verfahren geeignet ist, kann beispielsweise auch eine teilstabile Emulsion sein, welche bei Bewegung emulgiert und damit in dieser Phase das Öl von den Partikeln löst und welche in einer Ruhephase sich in die Bestandteile waschaktive Substanzen und Öl auftrennt, sodaß das Öl beispielsweise mit einer Zentrifuge zur Wiederverwendung aufbereitete werden kann.

Die Erfindung wird nachfolgend anhand von Ausführungsbeispielen näher erläutert. Es zeigt

Fig. 1 den Aufbau einer Einrichtung zur Durchführung des Aufbereitungsverfahrens,
Fig. 2 eine Draufsicht auf den in Fig. 1 dargestellten Trennbehälter,
Fig. 3 bis 9 die in Figur 1 gezeigte Einrichtung während verschiedener Verfahrensstufen.

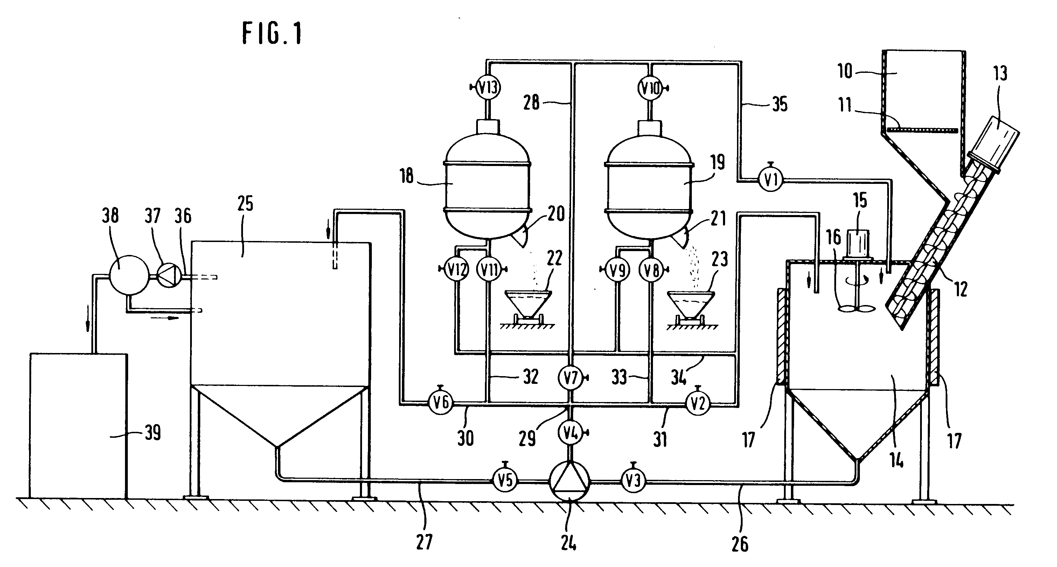

Die in Figur 1 gezeigte Vorrichtung zur Aufbereitung von Rückständen aus der spanabhebenden Bearbeitung ferromagnetischer Werkstoffe weist eine Aufgabestelle 10 auf, die an ihrer Oberseite ein Einfüllöffnung enthält und mit einem Rüttelsieb 11 ausgestattet ist. Das Rüttelsieb dient dazu, Teile die fälschlicherweise zu den Rückständen gelangt sind, zu entfernen. Unterhalb der Aufgabestelle 10 befindet sich eine Dosiereinrichtung in Form eines Schneckendosierers 12. Dieser Schneckendosierer wird von einem Antriebsmotor 13 angetrieben. Die Steuerung des Antriebsmotors erfolgt, wie auch die gesamte Steuerung der Vorrichtung, über eine geeignete Steuereinrichtung. Der Schneckendosierer 12 fördert die Rückstände unmittelbar in einen Behälter 14. Dieser besteht aus einem zylinderförmigen Oberteil und einem trichterförmigen Auslauf. Im Behälter ist eine Rühreinrichtung 15 angeordnet welche mit ihrem Flügelrad 16 für eine Durchmischung des Behälterinhalts sorgt. Außerhalb der zylinderförmigen Außenwand des Behälters befinden sich Permanentmagnete 17, die radialbeweglich angeordnet sind und somit von der

EP 0 463 442 B1

Behälterwand abgeschwenkt werden können. Es sind weitherin zwei Druckluft-Schlammaufbereitungsfilter 18, 19 vorgesehen. Solche Filter sind beispielsweise aus der Druckschrift VKD 5028 der Firma Mann + Hummel GmbH bzw. 7-87 2.5M der Firma Hydromation Belgien bekannt. Diese Druckluft-Schlammaufbereitungsfilter 18, 19 bestehen aus einer Filterfläche in denen sich der Schlamm, der in der zugeführten Flüssigkeit enthalten ist, ablagert. Dieser Schlamm wird nachfolgend in diesen Filtern getrocknet, d.h. mit Druckluft beaufschlagt und nachdem die Restfeuchte auf einen geringen Wert abgesunken ist, über Austrageinrichtungen 20, 21 jeweils einem Transportbehälter 22, 23 zugeführt. Wie aus der Figur ersichtlich, sind sämtliche Komponenten über Rohrleitungen miteinander verbunden. In den Rohrleitungen sind Ventile V 1 bis V 13 angeordnet. Diese Ventile haben die Aufgabe, verschiedene Rohrleitungen zu verbinden bzw. für die verschiedenen Verfahrensschritte die entsprechenden Rohrleitungen zu öffnen und zu schließen.

Zum Umwälzen der in dem gesamten System enthaltenen Flüssigkeit ist eine einzige Umwälzpumpe 24 vorgesehen.

Es ist weiterhin ein Behälter 25 zur Aufbereitung der in dem System enthaltenen Flüssigkeit vorgesehen. Die Regenerationsphase und die dazu benötigten Einrichtungen werden weiter unten beschrieben. Dieser Behälter 25 dient gleichzeitig auch als Speicher für die Flüssigkeit, welche eine Waschlösung ist und welche geeignet ist, das an den Schleifrückständen anhaftende Öl zu lösen und zu binden.

Der Trennbehälter 14 ist über eine Leitung 26 mit der Pumpe 24 verbunden. Von der Pumpe 24 führt eine Leitung 27 zu dem Behälter 25. In beiden Leitungen befinden sich Ventile V 3 und V 5. Ausgehend von der Pumpe 24 führt eine Leitung 28 zu den Druckluft-Schlammaufbereitungsfiltern 18, 19. In dieser Leitung befinden sich Ventile V 4, V 7, V 10, V 13, außerdem ist diese Leitung an dem Kreuzungspunkt 29 mit den Leitungen 30, 31 verbunden. Die Leitung 31 führt über das Ventil V 2 in den oberen Einlaß des Trennbehälters 14. Die Leitung 30 führt über das Ventil V 6 in den oberen Einlaß des Behälters 25. Vom Auslaß des Filters 18 führt eine Leitung 32 über ein Ventil V 11 zu der Leitung 30. Ebenso führt vom Auslaß des Filters 19 eine Leitung 33 über ein Ventil V 8 zu der Leitung 31. Ferner sind noch der Auslaß der beiden Filter 18, 19 über eine Leitung 34 und über Ventile V 9, V 12 mit der Leitung 31 verbunden, welche zu dem oberen Einlaß des Trennbehälters 14 führt. Die Leitung 28 ist über eine Leitung 35 und über ein Ventil V 1 an einen weiteren Einlaß des Trennbehälters 14 angeschlossen. Der Behälter 25 weist einen Auslaß 36 auf, an dem sich eine Pumpe 37 befindet. Der Pumpe nachgeordnet ist eine Einrichtung wie zum Beispiel eine Zentrifuge 38, welche zur Aufbereitung von Öl geeignet ist. Das aufbereitete Öl gelangt in einen Ölauffangbehälter 39.

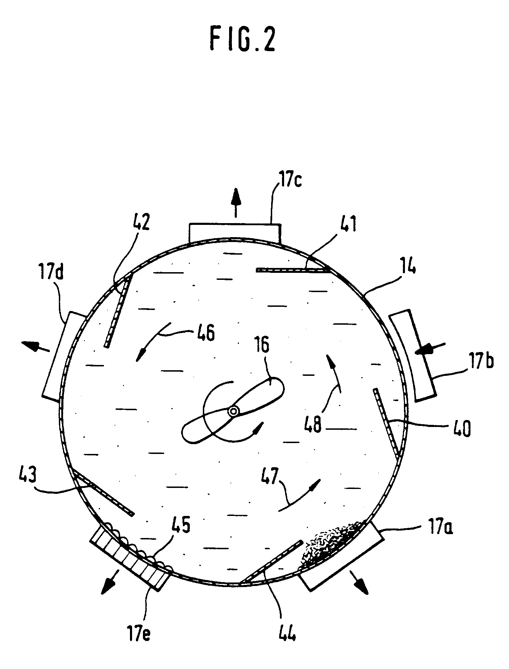

Die Figur 2 zeigt eine Draufsicht auf den Trennbehälter 14. Zu erkennen ist hier das Flügelrad 16, welches für eine Durchmischung der in dem Trennbehälter enthaltenen Bestandteile sorgt. In dem Behälter sind an dessen zylindrischer Außenwand Abweisbleche 40, 41, 42, 43, 44 vorgesehen. Die Abweisbleche befinden sich jeweils vor den an der Außenwand des Trennbehälters 14 angeordneten Permanentmagnete 17 a bis 17 e. Wie an dem Permanentmagnet 17 e gezeigt, besteht jeder aus mehreren Einzelmagneten, die Magnetisierungsrichtung verläuft im wesentlichen radial. Da das Behälterwandmaterial unmagnetisch ist, wirkt das von den Magneten erzeugte Feld in den Innenraum des Behälters hinein. Die Feldlinien 45 werden sich im wesentlichen gemäß der Figur ausbilden. Jeder der Magnete 17 a bis 17 e kann von der Behälterwand abgeschwenkt werden. Zur Darstellung dieses Vorgangs ist der Magnet 17 b von der Behälterwand abgeschwenkt. Der Abstand des Magneten von der Behälterwand ist dabei so bemessen, daß das Magnetfeld nicht mehr in dem Inneren des Behälters wirksam ist.

Die Funktion der Magnete und der Abweisbleche wird in der nachfolgenden Beschreibung des Verfahrensablaufs näher erläutert.

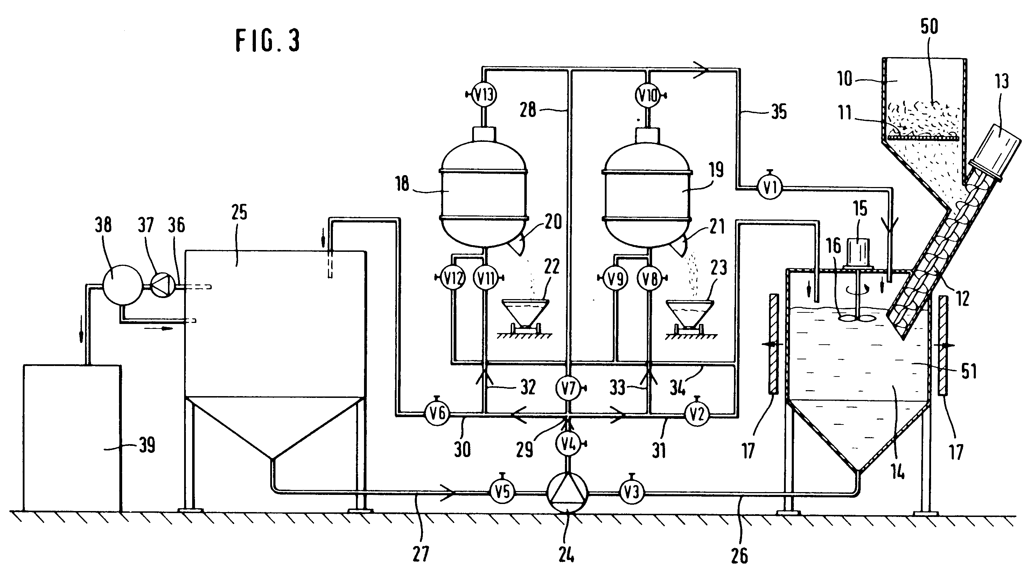

Die Figuren 3 bis 9 zeigen jeweils nochmals die gesamte Vorrichtung. Die einzelnen Verfahrensvorgänge sind in diesen Figuren dargestellt. Insbesondere ist aus diesen Figuren erkenntlich, welche Leitungsstränge für die Zirkulation bzw. das Umwälzen der Flüssigkeit geöffnet sind. Die geöffneten Leitungsstränge sind mit Pfeilen zur Kenntlichmachung der Durchflußrichtung versehen.

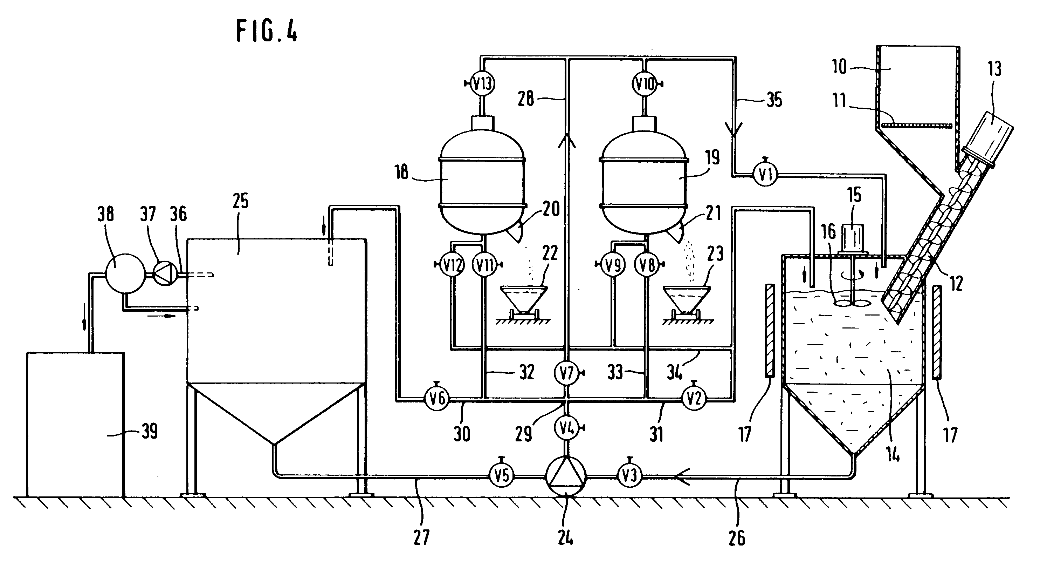

Zunächst wird vorausgesetzt, daß in der Aufgabestelle 10, wie in Fig. 3 gezeigt, sich Rückstände aus der spanabhebenden Bearbeitung ferromagnetischer Werkstoffe, d.h. Schleifmittelrückstände die mit Wasser und Öl behaftet sind, befinden. Diese Rückstände gelangen über den Rüttelsieb zu dem Schneckendosierer 12 und werden dosiert in den Behälter 14 gegeben. Beispielsweise wird eine Menge von 40 kg in den Behälter, der ein Fassungsvermögen von ca. 400 l aufweist, eingefüllt. Der Behälter wird zunächst mit Waschlösung befüllt. Diese Waschlösung befindet sich in dem Behälter 25, wird dort über die Leitung 27 von der Pumpe 24 über die Leitungen 32, 33 den Filtern 18, 19 zugeführt, verläßt diese Filter über die Leitung 35, und strömt über das Ventil V 1 in den Trennbehälter 14. Diese Flüssigkeitsführung bewirkt ein Rückspülen und damit ein Reinigen der in den Druckluft-Schlammaufbereitungsfiltern angeordneten Filterflächen. Des weiteren besteht die Möglichkeit, die Aufbereitungsfilter 18, 19 über die Leitung 38 bei

4

EP 0 463 442 B1

geöffnetem Ventil V 2 zu umgehen, die Ventile V 8 und V 11 sind dann geschlossen. Der Trennbehälter 14 wird so mit der Waschlösung befüllt. Erst nachdem eine ausreichende Menge an Waschlösung in dem Trennehälter vorhanden ist, fördert der Schneckendosierer 12 die vorgesehene Menge an Rückständen in den Trennbehälter 14. Gleichzeitig wird die Rühreinrichtung 15 in Betrieb gesetzt, sodaß eine Durchmischung der Waschlösung mit den Rückständen vorgenommen werden kann. Diese Durchmischungsphase ist in Figur 4 dargestellt.

Neben dem Durchmischen mittels der Rühreinrichtung 15 erfolgt auch ein Umwälzen des Behälterinhalts dadurch, daß die Pumpe 24 im Betrieb ist und über die Leitungen 26, 28 und 35 bei entsprechend geöffneten Ventilen V 3, V 4, V 7 und V 1 eine Zirkulation erzeugt wird. Dieses Mischen und Umwälzen des Behälterinhalts dauert so lange, bis das an den Rückständen anhaftende Öl sich von diesen Rückständen gelöst hat.

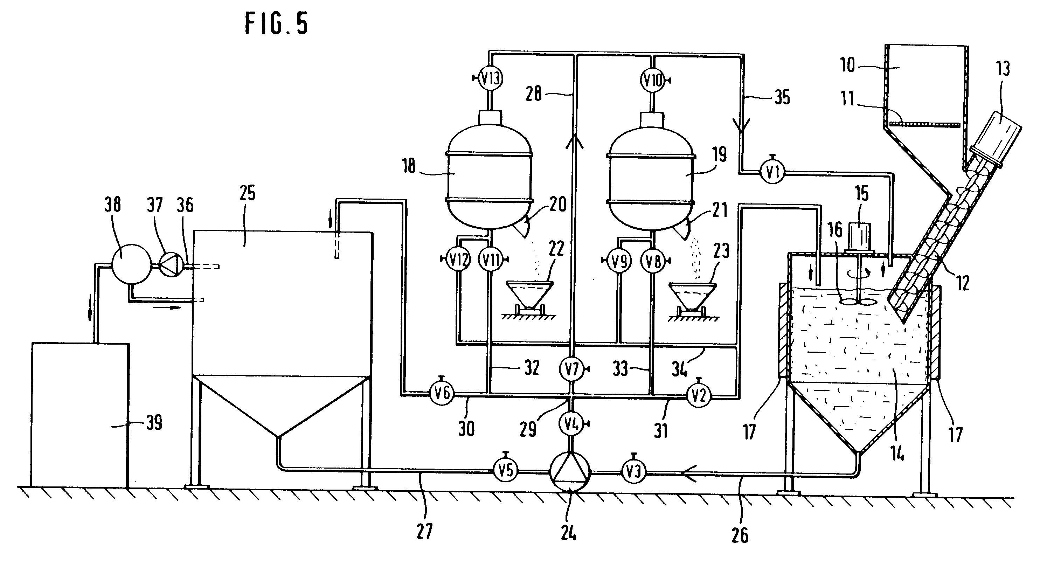

In Figur 5 ist der nächste Verfahrensschritt dargestellt:
Während dieses Verfahrensschrittes bleibt sowohl das Bewegen der Waschlösung mit der Rühreinrichtung 15, als auch die Zirkulation über die Leitung 26, Pumpe 24, Leitung 28 und 35 erhalten. Während dieser Phase werden jedoch die Permanentmagnete 17 a bis 17 e, welche bisher noch einen Abstand von der Behälterwand aufwiesen, an die Behälterwand angelegt, sodaß das magnetische Feld in dem Behälter wirksam wird.

In Figur 2 ist durch die Pfeile 46, 47, 48 angedeutet, daß die Flüssigkeit, welche sich in dem Behälter befindet, aufgrund der Bewegung des Flügelrads 16 im wesentlichen eine zirkulare Strömung aufweist. Nachdem die Permanentmagnete an die Außenwand des Behälters bewegt wurden, werden die in der Flüssigkeit enthaltenen ferromagnetischen Teilchen aus der zirkularen Bewegung abgelenkt und setzen sich im Bereich des Magnetfeldes, wie an dem Magnet 17 a gezeigt, ab. Die Abweisbleche 40 bis 44 haben dabei die Aufgabe, die Strömung im Bereich der magnetischen Feldlinien zu beruhigen bzw. einen strömungsfreien Raum durch entsprechende Anordnung der Abweisbleche zu schaffen, um

a) die mit Schmutz beladene Waschflüssigkeit von dem magnetischen Feld abzuleiten, damit nur die vorbeiströmenden, ferromagnetischen Bestandteile von den Magneten angezogen werden,
b) eine Aufwirbelung der ferromagnetischen Bestandteile, welche durch das magnetische Feld sich an der Behälterwand angelagert haben zu vermeiden,
c) einen frühzeitigen Verschleiß der Behälterinnenwand zu verhindern.

Nachdem sich die ferromagnetischen Bestandteile an der Behälterinnenwand im Bereich der magnetischen Wirkung der Permanentmagnete abgesetzt haben, befinden sich in dem Waschwasser lediglich noch die nicht ferromagnetischen Komponenten der Rückstände, also beispielsweise Korund, welches sich bei einem Schleifvorgang üblicherweise von dem Schleifmittel löst.

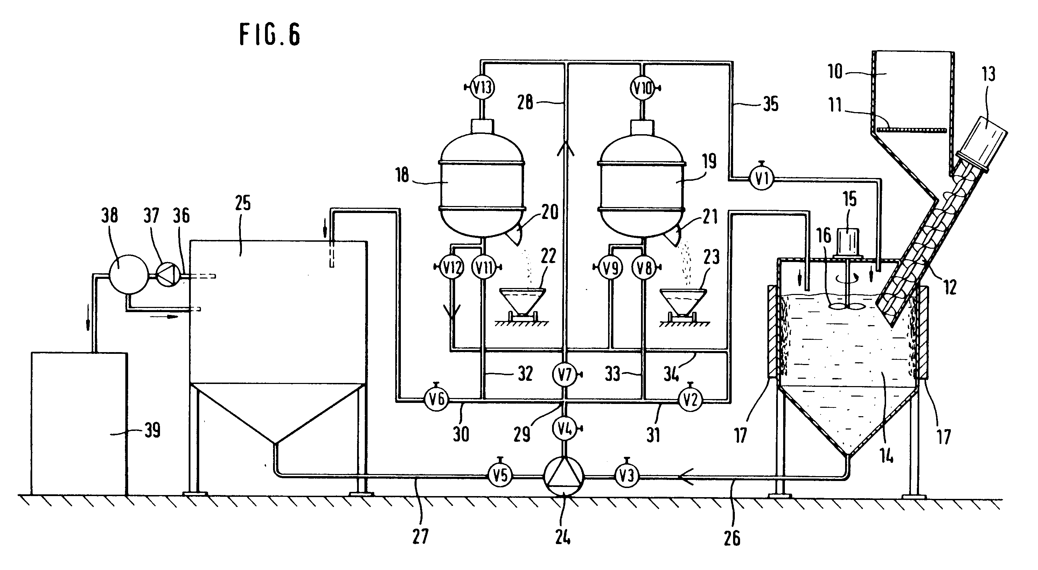

Sobald diese Phase der Vortrennung beendet ist, erfolgt in einer nächsten Phase, wie in Figur 6 gezeigt, das Ausfiltern der noch in der Flüssigkeit enthaltenen Bestandteile, also des restlichen Schleifschlammes. Hierzu wird unter weiterem Rühren mittels der Rühreinrichtung 15, die Flüssigkeit über die Leitung 26 und die Pumpe 24, der Leitung 28 zugeführt. Über diese Leitung 28 und das Ventil 13, welches geöffnet ist, gelangt die Flüssigkeit in den Druckluft-Schlammaufbereitungsfilter 18 und von dort über die Leitung 34 zurück in den Trennbehälter 14. Dieser Kreislauf wird so lange aufrechterhalten, bis die gesamte in dem Trennbehälter 14 enthaltene Flüssigkeit mehrmals durch das Filter 18 geleitet wurde und eine restlose Ausfiltrierung der in der Flüssigkeit enthaltenen Rückstände gewährleistet ist. Während dieses Vorgangs bleiben selbstverständlich die Permanentmagnete wirksam, d.h. die ferromagnetischen Bestandteile sind weiterhin an den Wänden des Trennbehälters 14 angelagert.

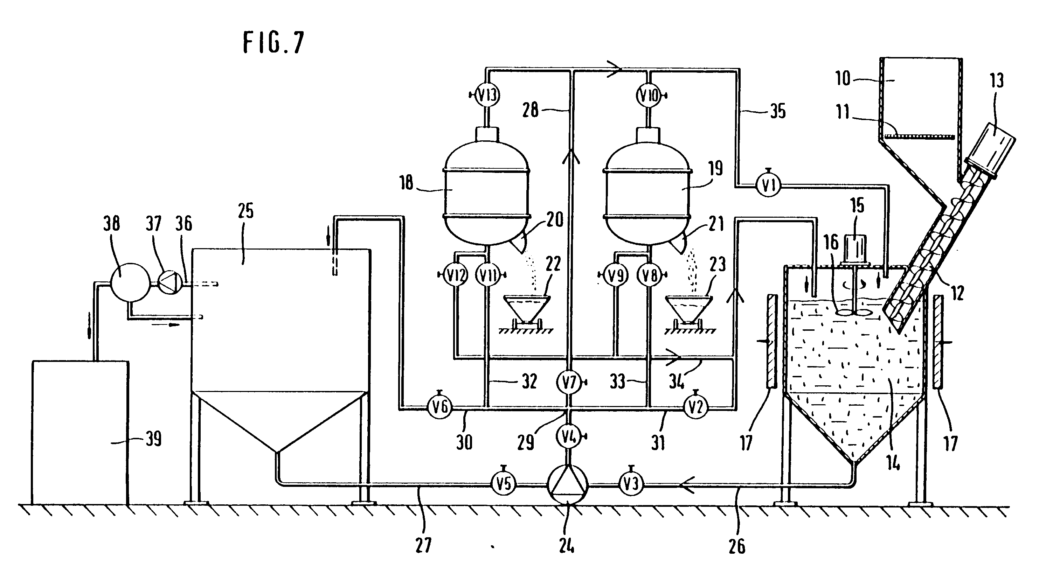

In dem nächsten Verfahrensschritt gemäß Figur 7, werden die Permanentmagnete 17 a bis 17 e von der Behälterwand nach außen bewegt, d.h. das magnetische Feld wird in dem Trennbehälter unwirksam; dadurch lösen sich die ferromagnetischen Bestandteile von der Behälterwand. Die Rühreinrichtung 15 ist weiterhin in Betrieb, sodaß diese Bestandteile wiederum in die Flüssigkeit eingemischt werden. Diese Flüssigkeit wird nunmehr über die Leitung 26 mittels der Pumpe 24 und über die Leitung 28 dem Druckluft-Schlammaufbereitungsfilter 19 zugeführt. Die filtrierte Flüssigkeit gelangt über das Ventil V 9 und die Leitung 34 wieder zurück in den Trennbehälter 14. Während dieser Phase werden die ferromagnetischen Bestandteile in dem Filter 19 angelagert. Gleichzeitig werden die Rückstände, die sich in Filter 18 befinden, über die Zuführung von Druckluft getrocknet.

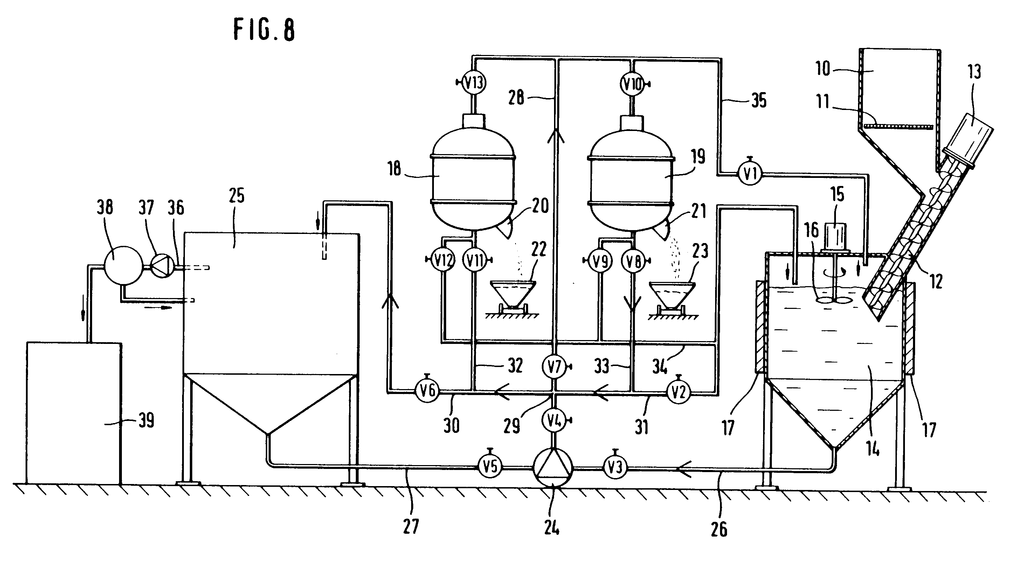

Im nächsten Verfahrensschritt gemäß Figur 8 wird der Trennbehälter 14 entleert, d.h. die Flüssigkeit gelangt über Leitung 26, Ventil 3, Pumpe 24 und Ventil 4 Leitung 30, Ventil 6 in den Behälter 25.

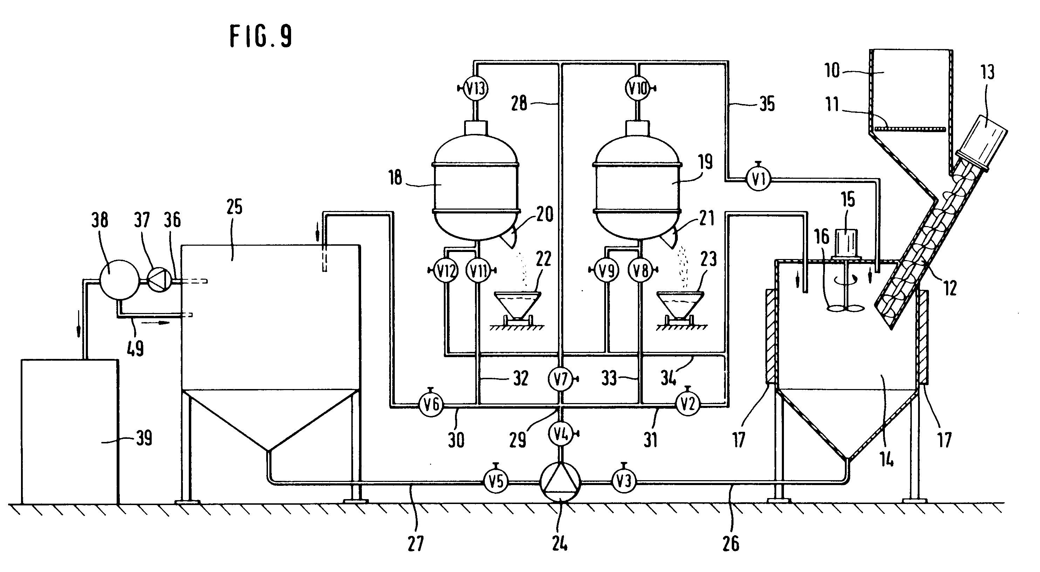

Nachdem die Flüssigkeit vollständig aus dem Trennbehälter 14 entfernt worden ist, folgt in einem letzten Verfahrensschritt gemäß Figur 9, das Trocknen der in dem Filter 19 enthaltenen Rückstände also der ferromagnetischen Bestandteile; außerdem erfolgt in dem Behälter 25 eine Trennung des Öls von dem Waschwasser. Das abgetrennte Öl wird über den Auslaß 36 und über die Pumpe 37 der Aufbereitungsanlage bzw. Zentrifuge 38 zugeführt. Diese Zentrifuge sondert eventuell noch in dem Öl enthaltene Wasser- und Schlammrückstände ab, das Öl gelangt in einen Ölauffangbehälter, das von der Zentrifuge abgeschiedene Wasser bzw. der Schlamm wird über die Leitung 49 in den Behälter 25 rückgeführt.

Nachdem die Trocknungsvorgänge in den Filtern 18 und 19 beendet sind, wird an den jeweiligen Austrageinrichtungen 20, 21 eine Klappe geöffnet. Die getrockneten und nunmehr getrennt vorliegenden Rückstände gelangen in Transportbehälter 22, 23.

Diese Rückstände liegen in einer nahezu trockenen Konsistenz vor, außerdem enthalten sie keine bzw. nur noch sehr geringe Anteile von Öl, sodaß eine Wiederaufbereitung oder eine Entsorgung problemlos möglich ist.

Bezugszeichenliste

10    Aufgabenstelle

11    Rüttelsieb

12    Schneckendosierer

13    Antriebsmotor

14    Trennbehälter

15    Rühreinrichtung

16    Flügelrad

17 a  Permanentmagnet

17 b  Permanentmagnet

17 c  Permanentmagnet

17 d  Permanentmagnet

17 e  Permanentmagnet

18    Druckluft-Schlammaufbereitungsfilter

19    Druckluft-Schlammaufbereitungsfilter

20    Austrageeinrichtung

21    Austrageeinrichtung

22    Transportbehälter

23    Transportbehälter

24    Umwälzpumpe

25    Behälter

26    Leitung

27    Leitung

28    Leitung

29    Kreuzungspunkt

**Patentansprüche**

1. Verfahren zur Aufbereitung von Rückständen aus der spanabhebenden Bearbeitung ferromagnetischer Werkstoffe, insbesondere mit Wasser und Öl behaftete Schleifrückstände (50) bei dem die Rückstände über eine Dosiervorrichtung (12) einem Trennbehälter (14) zugeführt werden, welcher mit einer Waschlösung (51) gefüllt ist, wobei eine Durchmischung der Rückstände (50) und der Waschlösung (51) erfolgt und an Behälterwänden ein magnetisches Feld (45) erzeugt wird, zur Anlagerung der ferromagnetischen Bestandteile an diesen Wänden, und wobei die Waschlösung (51) und der nicht ferromagnetische Inhalt des Trennbehälters einer Filtereinrichtung (18) zugeführt wird, zum Ausfiltern der nicht ferromagnetischen Anteile und anschließend das magnetische Feld abgebaut sowie die Waschlösung in den Behälter zurückgeführt wird und die an den Behälterwänden sich lösenden Bestandteile mit der Waschlösung (51) der genannten Filtereinrichtung (18) nachdem diese entleert wurde oder einer weiteren Filtereinrichtung (19) zugeführt werden, zum Ausfiltern dieser Bestandteile.

2. Verfahren nach Anspruch 1 dadurch gekennzeichnet, daß mittels einer Rührbewegung in dem Trennbehälter und/oder einem Umwälzen des Inhalts eine Durchmischung der Rückstände (50) und der Waschlösung (51) erfolgt.

3. Verfahren nach Anspruch 1 oder 2 dadurch gekennzeichnet, daß die Waschlösung (51) einem Behälter (25) zum Aufbereiten und Abscheiden des darin enthaltenen Öls zuführbar ist.

4. Verfahren nach Anspruch 1, 2 oder 3 dadurch gekennzeichnet, daß die den Filtereinrichtungen (18, 19) zugeführten Bestandteile mittels eines Luftstroms getrocknet werden und über Austragvorrichtungen (20, 21) in Auffangbehälter (22, 23) gelangen.

5. Verfahren nach Anspruch 4 dadurch gekennzeichnet, daß die Filtereinrichtungen (18, 19) nach dem Austragen der Bestandteile, mittels der Waschlösung (51) rückgespült werden.

6. Verfahren nach einem der vorherigen Ansprüche dadurch gekennzeichnet, daß innerhalb des Trennbehälters (14) in den Bereichen, in welchen das magnetische Feld einwirkt, Beruhigungszonen vorgesehen sind, um
   a) die mit Schmutz beladene Waschflüssigkeit von dem magnetischen Feld abzuleiten, damit nur die vorbeiströmenden, ferromagnetischen Bestandteile von den Magneten angezogen werden,
   b) eine Aufwirbelung der ferromagnetischen Bestandteile, welche durch das magnetische Feld sich an der Behälterwand angelagert haben, zu vermeiden,
   c) einen frühzeitigen Verschleiß der Behälterinnenwand zu verhindern.

7. Vorrichtung zum Aufbereiten von Rückständen aus der spanabhebenden Bearbeitung ferromagnetischer Werkstoffe insbesondere mit Wasser, Öl behaftete Schleifrückstände, wobei eine Aufgabestelle (10) vorhanden ist zum Einfüllen der Rückstände (50) und wobei eine Dosiervorrichtung (12) an der Aufgabestelle (10) eine bestimmte Menge der Rückstände (50) entnimmt und ein Trennbehälter (14) mit einem Rührwerk mit einer Waschlösung (51) gefüllt ist, welchem die dosierte Menge zugeführt wird, wobei die Wand des Trennbehälters wenigstens eine Fläche aufweist und eine Einrichtung (17) vorhanden ist, die an dieser Fläche wenigstens zeitweise ein magnetisches Feld erzeugt derart, daß zum Trennen der ferromagnetischen Bestandteile von den weiteren Bestandteilen der Rückstände (50), diese ferromagnetischen Bestandteile sich an dieser Wand anlagern, wobei wenigstens eine dem Trennbehälter (14) nachgeschaltete Filtereinrichtung (18, 19) vorhanden ist.

8. Vorrichtung nach Anspruch 7 dadurch gekennzeichnet, daß der Trennbehälter (14) ein Rührwerk (15, 16) aufweist und die Wand des Trennbehälters (14) am unteren Ende in einem trichterförmigen Auslauf endet.

9. Vorrichtung nach Anspruch 7 dadurch gekennzeichnet, daß der Inhalt des Trennbehälters mittels eines Ultraschallgenerators oder eines Stoßwellenerzeugers in eine Mischbewegung versetzt wird.

10. Vorrichtung nach Anspruch 7 dadurch gekennzeichnet, daß eine Pumpe (24) vorgesehen ist, und weiterhin zwei Filtereinrichtungen (18, 19) über die Pumpe (24) und über Rohrleitungen (26 - 35) sowie Ventilen (V1 - V 13) mit dem Behälter verbunden sind derart, daß der Behälterinhalt mittels der Pumpe sowohl über die erste als auch über die weitere Filtereinrichtung geleitet werden kann.

**11.** Vorrichtung nach einem der Ansprüche 7 bis 10 dadurch gekennnzeichnet, daß der Trennbehälter (14) einen im wesentlichen zylindrischen Außenmantel aufweist, und daß innerhalb des Behälters wenigstens ein vertikal angeordnetes Abweisblech (40 - 44) vorhanden ist, welches den Flüssigkeitsstrom während dem Betrieb des Rührwerks (15, 16) aus dem Bereich der Behälterwand ableitet und daß an der Außenseite der Behälterwand Magnete (17) angeordnet sind, die ein magnetisches Feld im Bereich der Behälterwand erzeugen.

**12.** Vorrichtung nach einem der Ansprüche 7 bis 10 dadurch gekennzeichnet, daß die Behälterwand aus mehreren ebenen Flächen zusammengesetzt ist in der Form eines regelmäßigen Mehrecks und daß wenigstens ein Abweisblech (40 - 44) vorhanden ist, welches den Flüssigkeitsstrom während dem Betrieb des Rührwerks aus dem Bereich der Behälterwand ableitet und daß an der Außenseite der Behälterwand Magnete angeordnet sind, die ein magnetisches Feld im Bereich der Behälterwand erzeugen.

**13.** Vorrichtung nach einem der vorherigen Ansprüche dadurch gekennzeichnet, daß die Magnete entweder Permanentmagnete sind, welche beweglich an der Behälterwand derart angeordnet sind, daß sie von der Behälterwand wegbewegt werden können, um die Wirkung des magnetischen Feldes innerhalb des Behälters aufzuheben, oder schaltbare Elektromagnete sind, deren Wirkung durch Abschalten der elektrischen Spannung aufgehoben werden kann.

**14.** Vorrichtung nach Anspruch 13 dadurch gekennzeichnet, daß die Magnete (17) fein- oder grobpolig ausgebildet sind.

**15.** Vorrichtung nach einem der vorherigen Ansprüche dadurch gekennzeichnet, daß der Trennbehälter (14) über die Pumpe (24) mit einem Behälter (25) verbunden ist, wobei innerhalb des Behälters (25) ein Abscheiden des in der Waschlösung (51) enthaltenen Öls erfolgt.

## Claims

**1.** Method of treating residues resulting from the machining of ferromagnetic materials, more especially grinding residues (50) which are charged with water and oil, wherein the residues are supplied, via a metering means (12), to a separating vessel (14) filled with a washing solution (51), the residues (50) and the washing solution (51) being thoroughly mixed, and a magnetic field (45) being produced at vessel walls for the accumulation of the ferromagnetic constituent ingredients on these walls, and the washing solution (51) and the non-ferromagnetic content of the separating vessel being supplied to a filtering means (18) for the filtering-out of the non-ferromagnetic ingredients, and subsequently the magnetic field is reduced, the washing solution is conducted back into the vessel, and the constituent ingredients, which become detached from the vessel walls, are supplied, together with the washing solution (51), to said filtering means (18) after the latter has been emptied or are supplied to an additional filtering means (19), for the filtering-out of these constituent ingredients.

**2.** Method according to claim 1, characterised in that the residues (50) and the washing solution (50) are thoroughly mixed by means of an agitating movement in the separating vessel and/or by means of a circulatory movement of the content.

**3.** Method according to claim 1 or 2, characterised in that the washing solution (51) can be supplied to a vessel (25) for treating and separating the oil contained therein.

**4.** Method according to claim 1, 2 or 3, characterised in that the constituent ingredients, which are supplied to the filtering means (18, 19), are dried by means of an air flow and pass into collecting vessels (22, 23) via discharge means (20, 21).

**5.** Method according to claim 4, characterised in that the filtering means (18, 19) are rinsed out again by means of the washing solution (51) after the constituent ingredients have been discharged.

6. Method according to one of the preceding claims, characterised in that steadying zones are provided internally of the separating vessel (14) in the regions which are affected by the magnetic field, in order
   a) to conduct the washing fluid, charged with dirt, away from the magnetic field so that only the ferromagnetic constituent ingredients flowing past are attracted by the magnets,
   b) to avoid an eddying effect of the ferromagnetic constituent ingredients, which have accumulated on the vessel wall as a result of the magnetic field,
   c) to prevent premature wear of the internal vessel wall.

7. Apparatus for treating residues resulting from the machining of ferromagnetic materials, more especially grinding residues which are charged with water and oil, wherein a feeding station (10) is provided for the introduction of the residues (50), and wherein a metering means (12) at the feeding station (10) removes a predetermined quantity of the residues, and a separating vessel (14), provided with an agitator, is filled with a washing solution (51), the metered quantity being supplied thereto, wherein the wall of the separating vessel has at least one face, and a means (17) is provided which at least temporarily produces a magnetic field at this face in such a manner that, in order to separate the ferromagnetic constituent ingredients from the other constituent ingredients of the residues (50), these ferromagnetic constituent ingredients accumulate on this wall, at least one filtering means (18, 19) being provided, which is connected downstream of the separating vessel (14).

8. Apparatus according to claim 7, characterised in that the separating vessel (14) includes an agitator (15, 16), and the lower end of the wall of the separating vessel (14) terminates in a funnel-shaped outlet.

9. Apparatus according to claim 7, characterised in that the content of the separating vessel is set into a mixing movement by means of an ultrasonic generator or a shock wave generator.

10. Apparatus according to claim 7, characterised in that a pump (24) is provided, and additionally two filtering means (18, 19) are connected to the vessel via the pump (24) and via conduits (26 - 35) as well as via valves (V1 - V13) in such a manner that the vessel content can be conducted by means of the pump both via the first filtering means and via the additional filtering means.

11. Apparatus according to one of claims 7 to 10, characterised in that the separating vessel (14) has a substantially cylindrical outer casing, and in that at least one vertically disposed deflection plate (40 - 44) is provided internally of the vessel, which plate diverts the flow of fluid from the region of the vessel wall during the operation of the agitator (15, 16), and in that magnets (17) are disposed on the external surface of the vessel wall and produce a magnetic field in the region of the vessel wall.

12. Apparatus according to one of claims 7 to 10, characterised in that the vessel wall is composed of a plurality of flat faces in the form of a regular polygon, and in that at least one deflection plate (40 - 44) is provided, which diverts the flow of fluid from the region of the vessel wall during the operation of the agitator, and in that magnets are disposed on the external surface of the container wall and produce a magnetic field in the region of the vessel wall.

13. Apparatus according to one of the preceding claims, characterised in that the magnets are either permanent magnets, which are displaceably disposed on the vessel wall in such a manner that they can be moved away from the vessel wall in order to counteract the effect of the magnetic field internally of the vessel, or switchable electromagnets, the effect of which can be counteracted by disconnection of the electric voltage.

14. Apparatus according to claim 13, characterised in that the magnets (17) have a fine or coarse polarity.

15. Apparatus according to one of the preceding claims, characterised in that the separating vessel (14) is connected to a vessel (25) via the pump (24), the oil contained in the washing solution (51) being separated internally of the vessel (25).

**Revendications**

1. Procédé de revalorisation des résidus de matière ferromagnétique provenant de l'usinage avec enlèvement de copeaux, notamment de résidus de meulage (50) chargés d'eau et d'huile, selon lequel on introduit les résidus dans un récipient séparateur (14) à travers un dispositif de dosage (12), ce réservoir séparateur étant rempli d'une solution de lavage (51), et on mélange les résidus (50) et la solution de lavage (51) et on crée un champ magnétique (45) sur les parois du récipient, pour déposer sur les parois du récipient les composants ferromagnétiques, et on fournit la solution de lavage (51) et le contenu non ferromagnétique du réservoir séparateur à une installation de filtre (18) pour séparer par filtrage les composants non ferromagnétiques puis on supprime le champ magnétique et on remet la solution de lavage dans le réservoir et on fournit les composants qui se détachent des parois du réservoir, avec la solution de lavage (51) à l'installation de filtre (18) déjà évoquée, après avoir vidé celle-ci ou à une autre installation de filtre (19) pour séparer ces composants par filtrage.

2. Procédé selon la revendication 1, caractérisé en ce qu'avec un mouvement d'agitation dans le réservoir séparateur et/ou par mise en circulation du contenu on fait un mélange des résidus (50) et de la solution de lavage (51).

3. Procédé selon la revendication 1 ou 2, caractérisé en ce qu'on fournit la solution de lavage (51) à un réservoir (25) pour préparer et séparer l'huile contenue dans cette solution.

4. Procédé selon la revendication 1, 2 ou 3, caractérisé en ce qu'on sèche dans un courant d'air les composants fournis aux installations de filtre (18, 19) et on les conduit dans un réservoir de réception (22, 23) par l'intermédiaire de dispositifs d'évacuation (20, 21).

5. Procédé selon la revendication 4, caractérisé en ce qu'on rince de nouveau avec la solution de lavage (51), les installations de filtre (18, 19) après enlèvement des composants.

6. Procédé selon l'une des revendications précédentes, caractérisé en ce qu'à l'intérieur du réservoir séparateur (14), dans les zones dans lesquelles agit le champ magnétique, on a des zones pour calmer l'écoulement, pour
   a) évacuer du champ magnétique, le liquide de lavage chargé de saletés, pour que seuls les composants ferromagnétiques qui circulent soient attirés par les aimants,
   b) on évite de faire décoller les composants ferromagnétiques qui se sont déposés sur la paroi du réservoir sous l'effet du champ magnétique,
   c) on évite une usure prématurée de la paroi intérieure du réservoir.

7. Procédé de revalorisation des résidus d'un usinage avec enlèvement de copeaux de matériaux ferromagnétiques notamment de résidus d'abrasion chargés d'eau et d'huile, comprenant un point d'entrée (10) pour introduire les résidus (50), un dispositif de dosage (12) recevant au point d'introduction (10), une certaine quantité de résidus (50) et un réservoir séparateur (14) avec un agitateur, contenant une solution de lavage (51) qui reçoit la quantité dosée, la paroi du réservoir séparateur ayant au moins une surface et une installation (17) pour créer au niveau de cette surface au moins de temps en temps un champ magnétique servant à séparer des composants ferromagnétiques des autres composants des résidus (50), ces composants ferromagnétiques se déposant sur la paroi, au moins une installation de filtre (18, 19) étant prévue en aval du réservoir séparateur (14).

8. Dispositif selon la revendication 7, caractérisé en ce que le réservoir séparateur (14) comporte un agitateur (15, 16) et la paroi du réservoir séparateur (14) se termine dans sa partie inférieure par une sortie en forme de trémie.

9. Dispositif selon la revendication 7, caractérisé en ce que le contenu du réservoir séparateur est mis en mouvement de mélange à l'aide d'un générateur d'ultrason ou d'un générateur d'onde de choc.

10. Dispositif selon la revendication 7, caractérisé par une pompe (24) ainsi que deux installations de filtre (18, 19) qui sont reliées au réservoir par la pompe (24) et les conduites (26 - 35) ainsi que les vannes (V1 - V13) de façon que le contenu du réservoir puisse être conduit par la pompe à la fois à travers la première et la seconde installation de filtre.

11. Dispositif selon l'une des revendications 7 à 10, caractérisé en ce que le réservoir séparateur (14) présente une enveloppe extérieure essentiellement cylindrique et en ce qu'à l'intérieur du réservoir il y a au moins une tôle de déflexion (40 -44) verticale qui dévie le courant de liquide de la zone de la paroi du réservoir pendant que fonctionne l'agitateur (15, 16) et en ce que sur la face extérieure de la paroi du réservoir il y a des aimants (17) qui créent un champ magnétique au niveau de la paroi du réservoir.

12. Dispositif selon l'une des revendications 7 à 10, caractérisé en ce que la paroi du réservoir se compose de plusieurs surfaces planes sous la forme de polygones réguliers et en ce qu'il comporte au moins une tôle de déflexion (40 - 44) qui dévie le courant de liquide de la zone de la paroi du réservoir pendant que fonctionne l'agitateur et en ce que sur les côtés extérieurs de la paroi du réservoir il y a des aimants qui créent un champ magnétique au niveau de la paroi du réservoir.

13. Dispositif selon l'une des revendications précédentes, caractérisé en ce que les aimants sont soit des aimants permanents montés de manière mobile sur la paroi du réservoir et qui peuvent être écartés de la paroi pour supprimer le champ magnétique à l'intérieur du réservoir, soit des électroaimants commutables dont l'action est supprimée par la coupure de la tension électrique.

14. Dispositif selon la revendication 13, caractérisé en ce que les aimants (17) sont à pôle grossier ou à pôle fin.

15. Dispositif selon l'une des revendications précédentes, caractérisé en ce que le réservoir séparateur (14) est relié par la pompe (24) à un réservoir (25) et à l'intérieur du réservoir (25) on sépare l'huile contenue dans la solution de lavage (51).

FIG.1

# FIG.2

FIG. 3

FIG.4

EP 0 463 442 B1

# FIG.5

EP 0 463 442 B1

FIG.6

EP 0 463 442 B1

FIG.7

# FIG. 8

EP 0 463 442 B1

FIG.9